(19) Europäisches Patentamt
European Patent Office
Office européen des brevets

(11) EP 3 521 355 B1

(12) EUROPEAN PATENT SPECIFICATION

(45) Date of publication and mention of the grant of the patent:
**30.06.2021 Bulletin 2021/26**

(51) Int Cl.:
***C08K 3/08*** *(2006.01)* ***C09D 11/104*** *(2014.01)*
***C09D 11/322*** *(2014.01)*

(21) Application number: **19154351.1**

(22) Date of filing: **29.01.2019**

(54) **ANTI-BACTERIAL AQUEOUS INK COMPOSITIONS COMPRISING WATER SOLUBLE SODIO-SULFONATED POLYESTER**

ANTIBAKTERIELLE WÄSSRIGE TINTENZUSAMMENSETZUNGEN MIT WASSERLÖSLICHEN SODIO-SULFONIERTEM POLYESTER

COMPOSITIONS D'ENCRES AQUEUSES ANTIBACTÉRIENNES COMPRENANT UN POLYESTER SODIO-SULFONÉ SOLUBLE DANS L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2018 US 201815886381**

(43) Date of publication of application:
**07.08.2019 Bulletin 2019/32**

(73) Proprietor: **Xerox Corporation**
**Webster, NY 14580 (US)**

(72) Inventors:
- **CHOPRA, Naveen**
  **Oakville, Ontario L6H 5W4 (CA)**
- **SACRIPANTE, Guerino G.**
  **Oakville, Ontario L6H 4T7 (CA)**
- **FARRUGIA, Valerie M.**
  **Oakville, Ontario L6H 7V8 (CA)**

(74) Representative: **Gill Jennings & Every LLP**
**JWF**
**The Broadgate Tower**
**20 Primrose Street**
**London EC2A 2ES (GB)**

(56) References cited:
**US-A1- 2016 326 337** **US-A1- 2016 326 390**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 521 355 B1

## Description

Disclosed herein is a composite including a sodium sulfonated polyester matrix; wherein the sodium sulfonated polyester has a degree of sulfonation of at least about 7.5 mol percent; and a plurality of silver nanoparticles dispersed within the matrix. Further disclosed is an aqueous ink composition including water; an optional co-solvent; an optional colorant; and a composite comprising a sodium sulfonated polyester matrix; wherein the sodium sulfonated polyester has a degree of sulfonation of at least about 7.5 mol percent; and a plurality of silver nanoparticles dispersed within the matrix. Further disclosed is a method including heating a sodium sulfonated polyester resin in water, wherein the sodium sulfonated polyester has a degree of sulfonation of at least about 7.5 mol percent; adding a solution of a silver (I) ion to the heated resin in water to form a mixture; optionally, adding a reducing agent to the mixture; forming an emulsion of composite particles comprising a sodium sulfonated polyester matrix and a plurality of silver nanoparticles disposed within the sodium sulfonated polyester matrix.

There is a growing problem related to bacterial and fungal contamination through contact with surfaces and objects especially within hospitals, medical clinics, airplanes, and cruise ships, to mention a few. Individuals suffering from gastroenteritis, for example, can easily spread the illness by touching handrails, shared utensils, elevator buttons, etc. In some cases, contamination can be deadly especially in the cases of outbreaks of gastroenteritis acquired on cruise ships caused by Noroviruses or food poisoning due to particular strains of *Escherichia coli* and *Salmonella.* Another bacterium, *Staphylococcus aureus,* is a major culprit for many illnesses and skin irritations. There is a type of *Staphylococcus aureus* that is Methicillin-resistant (known as MRSA) which is resistant to the antibiotic methicillin and other drugs in this class.

The use of an organic biocide in materials such as polymers, inks toners, etc., for preventing microbial growth, is described, for example, in U. S. Patent 6,210,474, which is hereby incorporated by reference herein in its entirety. However, anti-microbial effectiveness within a printed or coated state of a printed ink or toner has not been described or demonstrated. As well, many anti-microbially active compounds are not compatible with aqueous ink jet ink formulations or include using solvents such as dimethylsulfoxide. Also, some ink jet ink compositions contain silver or even gold particles to produce metallic glossy prints, but have not been described or demonstrated to possess anti-microbial effectiveness. See, for example, U. S. Patent 8,616,694, which describes an ink jet recording method including an ink composition containing a glitter pigment.

U. S. Patent Application 20130189499, describes inks which include a mixture of solvent and a silver salt biocide including a silver sulfate biocide. Here, the clear or colored ink is applied in an imagewise fashion to a substrate, with fixing the clear or colored ink to the substrate whereby an effective coating or image article is formed that provides anti-bacterial and antifungal protection.

U.S. Patent 9,617,437, describes in the Abstract thereof an aqueous ink composition including water; an optional co-solvent; an optional colorant; and a composite comprising a sulfonated polyester matrix having a plurality of silver nanoparticles dispersed within the matrix. A process including incorporating the aqueous ink into an ink jet printing apparatus; ejecting droplets of ink in an imagewise pattern onto an intermediate transfer member or directly onto a final image receiving substrate; optionally, heating the image to partially or completely remove solvents; and optionally, when an intermediate transfer member is used, transferring the ink in the imagewise pattern from the intermediate transfer member to a final recording substrate.

A need remains for aqueous anti-bacterial ink compositions. Further, a need remains for aqueous anti-bacterial ink compositions having anti-microbial effectiveness within a printed or coated state of the printed ink. Further, a need remains for aqueous anti-bacterial ink compositions having anti-microbial effectiveness within a printed or coated state of the printed ink, that are environmentally friendly, and that do not require organic solvents. Further, a need remains for improved polymer binders suitable for anti-bacterial ink applications. Further, a need remains for composites having improved water dispersibility for use in aqueous ink compositions.

Described is a composite including a sodium sulfonated polyester matrix; wherein the sodium sulfonated polyester has a degree of sulfonation of at least about 7.5 mol percent; and a plurality of silver nanoparticles dispersed within the matrix.

Also described is an aqueous ink composition including water; an optional co-solvent; an optional colorant; and a composite comprising a sodium sulfonated polyester matrix; wherein the sodium sulfonated polyester has a degree of sulfonation of at least about 7.5 mol percent; and a plurality of silver nanoparticles dispersed within the matrix.

Also described is a method including heating a sodium sulfonated polyester resin in water, wherein the sodium sulfonated polyester has a degree of sulfonation of at least about 7.5 mol percent; adding a solution of a silver (I) ion to the heated resin in water to form a mixture; optionally adding a reducing agent to the mixture; forming an emulsion of composite particles comprising a sodium sulfonated polyester matrix and a plurality of silver nanoparticles disposed within the sodium sulfonated polyester matrix.

Figure 1 shows a schematic of a method for preparing silver-containing sulfonated polyester latex materials with anti-bacterial properties.

Sulfopolyester materials having varying degrees of sulfonation are provided which enable tailoring of an ink composition for desired characteristics including silver nanoparticle loading, viscosity, water fastness, surface finish, and combinations thereof.

In embodiments, a composite is provided comprising a sodium sulfonated polyester matrix, wherein the sodium sulfonated polyester has a degree of sulfonation of at least about 7.5 mol percent; and a plurality of silver nanoparticles dispersed within the matrix.

In embodiments, the sodium sulfonated polyester has a high degree of sulfonation. In embodiments, the sodium sulfonated polyester has a degree of sulfonation of at least about 7.5 mol percent, at least about 10 mol percent, at least about 15 mol percent, or at least about 20 mol percent. In embodiments, the sodium sulfonated polyester has a degree of sulfonation of from at least about 7.5 mol percent to about 20 mol percent, or from at least about 7.5 mol percent to about 15 mol percent, or from at least about 7.5 mol percent to about 10 mol percent.

As used herein, mol percent refers, for example, to the percentage of moles of sulfonated monomer present in the final resin and can be calculated, for example, as (moles DMSIP (Dimethyl-5-Sulfoisophthalate Sodium Salt) charged/(total moles charged less excess moles glycol) X 100 percent).

In embodiments, the polymer is made from a 1:1 ratio of total diacid and total diol. There an excess of glycol in the formulation that gets removed (distilled) during the reaction. The following calculation example can be used to determine mol percent sulfonation.

$$\%\ \text{Mole of sodio} = (\text{moles of ISPT}) / 2(\text{moles of ISPT} + \text{moles of DMT})$$

**Table 1**

| | Mw | Mass | Moles | % Mole |
|---|---|---|---|---|
| DMT | 194.19 | 388 | 1.998043 | |
| ISPT | 296.23 | 44 | 0.148533 | 3.459771 |
| PG | 76 | 302 | 3.973684 | |
| DEG | 106 | 34 | 0.320755 | |
| TMP | 134 | 3 | 0.022388 | |
| | | | 6.463403 | |
| wherein DMT is dimethyl terephthalate;<br>ISPT is sodium 5-sulfoisophthalic acid;<br>PG is polyethylene glycol;<br>DEG is diethylene glycol; and<br>TMP is trimethylolpropane. | | | | |

The sulfonated polyester is a self-dissipatible polymer, meaning that it can be dispersed in water without the need for additional surfactants. By varying the degree of sulfonation, in embodiments, by providing a high degree of sulfonation, such as at least about 7.5 mol percent sulfonation, the present embodiments enable tailoring of dispersion size and ability to uptake silver ions, which then enables the ability to select material properties, including clarity, viscosity, film uniformity, etc., and combinations thereof, and silver nanoparticle distribution.

In embodiments, the composites are prepared by synthesizing silver nanoparticles (AgNPs) by reduction of silver (I) ion simultaneously during the self-assembly of sodio-sulfonated polyester resin particles in water. The methods which employ water as the bulk solvent are environmentally friendly being free of organic solvents. The methods are efficient requiring minimal time to prepare the polymer metal nanocomposites.

Thus, silver sulfonated polyester complexes are prepared herein by synthesizing silver nanoparticles (AgNPs) by reduction of silver (I) ion simultaneously during the self-assembly of sodio-sulfonated polyester resin particles in water. The methods which employ water as the bulk solvent are environmentally friendly being free of organic solvents. The methods are efficient requiring minimal time to prepare the polymer metal nanocomposites. Without being bound by theory, it is postulated that silver ions are trapped within the polymer matrix during the self-assembly of the sodio-sulfonated polyester while simultaneously being reduced to AgNPs. For further background detail, see, U. S. Patent Application Serial Number 14/531,900.

The silver sulfonated polyester complexes are simultaneously synthesized during the self-assembly or dispersing of polymer in water as indicated in Figure 1. Referring to Figure 1, the sulfonated polyester is dispersed in water, for

example at a temperature of about 90 °C, providing a hydrophobic resin core and hydrophilic surface sulfonated groups. Silver salt, for example silver nitrate, is added along with an optional reducing agent to provide the silver-containing sulfonated polyester composite.

Thus, the sodio-sulfonated polyester serves as both a carrier for the silver ions and an organic matrix for the *in situ* synthesis of silver nanocomposites. The reducing agent is added during the self-assembly of sodio-sulfonated polyester to reduce silver nitrate into silver nanoparticles (AgNPs) resulting in well dispersed particles. The polyester matrix plays an important role as it is postulated to inhibit the agglomeration of AgNPs. Meanwhile, the porosity of the sulfonated polyester allows the silver ions to diffuse and/or absorb throughout the polymer matrix allowing unhindered interaction with the sulfonate functional groups of the polyester. Optionally, a reducing agent is employed in the reduction of silver ion which reducing agent also freely diffuses throughout the polyester matrix and promotes the formation of well-dispersed AgNPs on the surface and interior of the polyester particles. Advantageously, the process minimizes nanoparticle agglomeration that plagues conventional methods with pre-formed nanoparticles. The sulfonated polymer matrix has an important role in keeping the AgNPs dispersed as well as maintaining overall chemical and mechanical stability of the composite.

The sulfonated polyester resins disclosed herein have been selected to have a hydrophobic backbone while presenting hydrophilic sulfonate groups attached along the chain. Without being bound by theory, when placed in water and heated, the hydrophobic portions may interact with each other to form a hydrophobic core with the hydrophilic sulfonate groups facing the surrounding water resulting in the sulfonated polyester self-assembling into a higher order, spherical nanoparticle without the requirement of additional reagents, such as surfactants or dispersants, which are typically required to stabilize colloidal dispersions. Thus, there is a higher order involving the amphiphilic polyester, in which the hydrophobic backbone, which is insoluble in water, and the watersoluble hydrophilic sulfonate groups, operate as macrosurfactants. This results in self-association, self-assembly, self-dispersible nanoparticles in aqueous medium to yield micelle-like aggregates. The formation of silver nanoparticles within and surrounding the micelles is a secondary occurrence upon addition of silver nitrate and reducing agent.

In embodiments, there are provided composites comprising a sulfonated polyester matrix, and a plurality of silver nanoparticles dispersed within the matrix.

In embodiments, the sulfonated polyester matrix is a branched polymer. In embodiments, the sulfonated polyester matrix is a linear polymer. The selection of branched or linear polymer may depend on, inter alia, the downstream application of the composite product. Linear polymers can be used to create strands of fibers or form a strong mesh-like structure. Branched polymers may be useful to confer thermoplastic properties on the resultant composite material.

Both linear amorphous and branched amorphous sulfonated polyester resins are alkali sulfonated polyester resins. The alkali metal in the respective sulfonated polyester resins may independently be lithium, sodium, or potassium. In a specific embodiment, the alkali metal in the respective sulfonated polyester resin is sodium.

In embodiments, the sulfonated polyester matrix is selected from the group consisting of poly(1,2-propylene-5-sulfoisophthalate), poly(neopentylene- 5-sulfoisophthalate), poly(diethylene-5-sulfoisophthalate), copoly-(1,2-propylene-5-sulfoisophthalate)-copoly-(1,2-propylene-terphthalate), copoly-(1,2-propylenediethylene-5-sulfoisophthalate)-copoly-(1,2-propylene-diethylene-terephthalatephthalate), copoly(ethylene-neopentylene-5-sulfoisophthalate)-copoly-(ethylene-neopentylene-terephthalatephthalate), and copoly(propoxylated bisphenol A)-copoly-(propoxylated bisphenol A-5-sulfoisophthalate). Thus, in embodiments, the sulfonated polyester matrix is lithium, potassium, or sodium salt, in specific embodiments, a sodium salt, of a polymer selected from the group consisting of poly(1,2-propylene-5-sulfoisophthalate), poly(neopentylene- 5-sulfoisophthalate), poly(diethylene- 5-sulfoisophthalate), copoly-(1,2-propylene- 5-sulfoisophthalate)-copoly-(1,2-propylene-terphthalate), copoly-(1,2-propylenediethylene-5-sulfoisophthalate)-copoly-(1,2-propylene-diethylene-terephthalatephthalate), copoly(ethylene-neopentylene-5-sulfoisophthalate)-copoly-(ethylene-neopentylene-terephthalatephthalate), and copoly(propoxylated bisphenol A)-copoly-(propoxylated bisphenol A-5-sulfoisophthalate).

In general, the sulfonated polyesters may have the following general structure, or random copolymers thereof in which the n and p segments are separated.

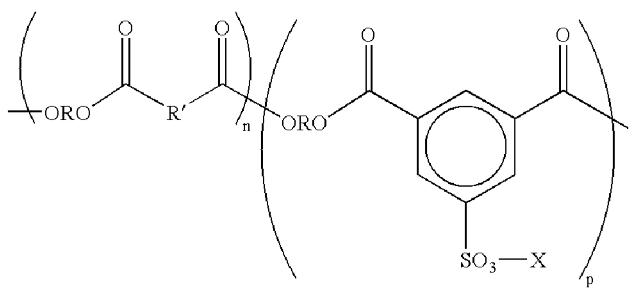

wherein R is an alkylene of, for example, from 2 to about 25 carbon atoms such as ethylene, propylene, butylene, oxyalkylene diethyleneoxide, and the like; R' is an arylene of, for example, from about 6 to about 36 carbon atoms, such as a benzylene, bisphenylene, bis(alkyloxy) bisphenolene, and the like; and p and n represent the number of randomly repeating segments, such as for example from about 10 to about 100,000.

In embodiments, the sulfonated polyester is a sodium sulfonated polyester having the structure

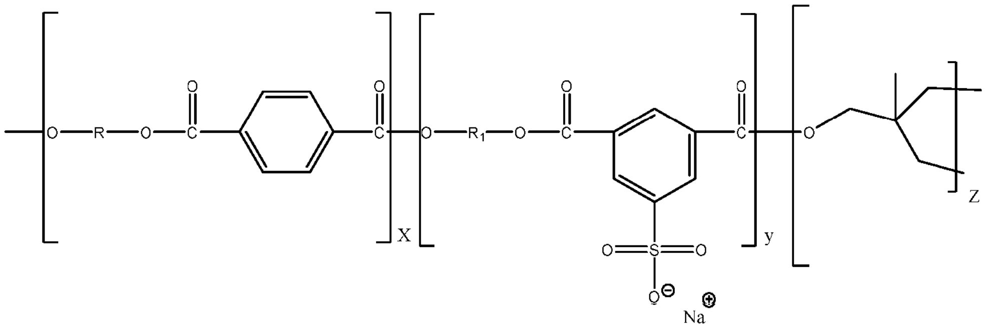

wherein R is an alkylene of, for example, from 2 to about 25 carbon atoms such as ethylene, propylene, butylene, oxyalkylene diethyleneoxide, and the like; $R_1$ is an alkylene of, for example, from 2 to about 25 carbon atoms such as ethylene, propylene, butylene, oxyalkylene diethyleneoxide, and the like; or an arylene of, for example, from about 6 to about 36 carbon atoms, such as a benzylene, bisphenylene, bis(alkyloxy) bisphenolene, and the like; or wherein, in embodiments, R and $R_1$ are each an alkyene of, for example, from about 2 to about 10 carbon atoms; and x, y and z represent the number of randomly repeating segments, such as for example from about 10 to about 100,000, wherein, in embodiments, y is from about 7.5 mol percent to about 20 mol percent, or from at least about 7.5 mol percent to about 15 mol percent, or from at least about 7.5 mol percent to about 10 mol percent of the resin.

Examples further include those disclosed in U.S. Patent No. 7,312,011 Specific examples of amorphous alkali sulfonated polyester based resins include, but are not limited to, copoly(ethylene-terephthalate)-copoly-(ethylene-5-sulfoisophthalate), copoly(propylene-terephthalate)-copoly(propylene-5-sulfoisophthalate), copoly(diethylene-terephthalate)-copoly(diethylene-5-sulfoisophthalate), copoly(propylene-diethylene-terephthalate)-copoly(propylene-diethylene-5-sulfo-isophthalate), copoly(propylene-butylene-terephthalate)-copoly(propylene-butylene-5-sulfo-isophthalate), copoly(propoxylated bisphenol-A-fumarate)-copoly(propoxylated bisphenol A-5-sulfo-isophthalate), copoly(ethoxylated bisphenol-A-fumarate)-copoly(ethoxylated bisphenol-A-5-sulfo-isophthalate), and copoly(ethoxylated bisphenol-A-maleate)-copoly(ethoxylated bisphenol-A-5-sulfo-isophthalate), and wherein the alkali metal is, for example, a sodium, lithium or potassium ion, and in specific embodiments a sodium ion. Examples of crystalline alkali sulfonated polyester based resins include, but are not limited to, alkali copoly(5-sulfoisophthaloyl)-co-poly(ethylene-adipate), alkali copoly(5-sulfoisophthaloyl)-copoly(propylene-adipate), alkali copoly(5-sulfoisophthaloyl)-copoly(butylene-adipate), alkali copoly(5-sulfo-isophthaloyl)-copoly(pentylene-adipate), and alkali copoly(5-sulfo-iosphthaloyl)-copoly(octylene-adipate), alkali copoly(5-sulfo-isophthaloyl)-copoly(ethylene-adipate), alkali copoly(5-sulfo-isophthaloyl)-copoly (propylene-adipate), alkali copoly(5-sulfo-isophthaloyl)-co-poly(butylene-adipate), alkali copoly(5-sulfo-isophthaloyl)-copoly(pentylene-adipate), alkali copoly(5-sulfo-isophthaloyl)-copoly(hexylene-adipate), alkali copoly(5-sulfo-isophthaloyl)-copoly(octylene-adipate), alkali copoly(5-sulfoisophthaloyl)-copoly(ethylene-succinate), alkali copoly(5-sulfoisophthaloyl-copoly(butylene-succinate), alkali copoly(5-sulfoisophthaloyl)-copoly(hexylene-succinate), alkali copoly(5-sulfoisophthaloyl)-copoly(octylene-succinate), alkali copoly(5-sulfo-isophthaloyl)-copoly(ethylene-sebacate), alkali copoly(5-sulfo-isophthaloyl)-copoly(propylene-sebacate), alkali copoly(5-sulfo-isophthaloyl)-copoly(butylene-sebacate), alkali copoly(5-sulfo-isophthaloyl)-copoly(pentylene-sebacate), alkali copoly(5-sulfo-isophthaloyl)-copoly(hexylene-sebacate), alkali copoly(5-sulfo-isophthaloyl)-copoly(octylene-sebacate), alkali copoly(5-sulfo-isophthaloyl)-copoly(ethylene-adipate), alkali copoly(5-sulfo-isophthaloyl)-copoly(propylene-adipate), alkali copoly(5-sulfo-iosphthaloyl)-copoly(butylene-adipate), alkali copoly(5-sulfo-isophthaloyl)-copoly(pentylene-adipate), alkali copoly(5-sulfo-isophthaloyl)copoly(hexylene-adipate), poly(octylene-adipate), and wherein the alkali is a metal such as sodium, lithium or potassium. In specific embodiments, the alkali metal is sodium.

The linear amorphous polyester resins are generally prepared by the polycondensation of an organic diol and a diacid or diester, at least one of which is sulfonated or a sulfonated difunctional monomer being included in the reaction, and a polycondensation catalyst. For the branched amorphous sulfonated polyester resin, the same materials may be used, with the further inclusion of a branching agent such as a multivalent polyacid or polyol.

Examples of diacid or diesters selected for the preparation of amorphous polyesters include dicarboxylic acids or diesters selected from the group consisting of terephthalic acid, phthalic acid, isophthalic acid, sulfonated isophthalic acid, fumaric acid, maleic acid, itaconic acid, succinic acid, succinic anhydride, dodecylsuccinic acid, dodecylsuccinic

anhydride, glutaric acid, glutaric anhydride, adipic acid, pimelic acid, suberic acid, azelic acid, dodecanediacid, dimethyl terephthalate, diethyl terephthalate, dimethylisophthalate, diethylisophthalate, dimethylphthalate, phthalic anhydride, diethylphthalate, dimethylsuccinate, dimethylfumarate, dimethylmaleate, dimethylglutarate, dimethyladipate, dimethyl dodecylsuccinate, and mixtures thereof. In embodiments, the sodium sulfonated polyester matrix comprises a diacid monomer unit selected from the group consisting of terephthalic acid, sulfonated isophthalic acid, and combinations thereof. The organic diacid or diester are selected, for example, from about 45 to about 52 mole percent of the resin. Examples of diols utilized in generating the amorphous polyester include trimethylolpropane, 1,2-propanediol, 1,3-propanediol, 1,2-butanediol, 1,3-butanediol, 1,4-butanediol, pentanediol, hexanediol, 2,2-dimethylpropanediol, 2,2,3-trimethylhexanediol, heptanediol, dodecanediol, bis(hydroxyethyl)-bisphenol A, bis(2-hydroxypropyl)-bisphenol A, 1,4-cyclohexanedimethanol, 1,3-cyclohexanedimethanol, xylenedimethanol, cyclohexanediol, diethylene glycol, bis(2-hydroxyethyl) oxide, dipropylene glycol, dibutylene, and mixtures thereof. The amount of organic diol selected can vary, and more specifically, is, for example, from about 45 to about 52 mole percent of the resin. In embodiments, the sulfonated polyester matrix comprises a polyol monomer unit selected from the group consisting of trimethylolpropane, 1,2-propanediol, diethylene glycol, and combinations thereof.

Alkali sulfonated difunctional monomer examples, wherein the alkali is lithium, sodium, or potassium, and in particular embodiments wherein the alkali is sodium, include dimethyl-5-sulfo-isophthalate, dialkyl-5-sulfo-isophthalate-4-sulfo-1,8-naphthalic anhydride, 4-sulfo-phthalic acid, 4-sulfophenyl-3,5-dicarbomethoxybenzene, 6-sulfo-2-naphthyl-3,5-dicarbomethoxybenzene, sulfo-terephthalic acid, dimethyl-sulfo-terephthalate, dialkyl-sulfo-terephthalate, sulfo-ethanediol, 2-sulfo-propanediol, 2-sulfo-butanediol, 3-sulfo-pentanediol, 2-sulfo-hexanediol, 3-sulfo-2-methylpentanediol, N,N-bis(2-hydroxyethyl)-2-aminoethane sulfonate, 2-sulfo-3,3-dimethylpentanediol, sulfo-p-hydroxybenzoic acid, mixtures thereof, and the like. Effective difunctional monomer amounts of, for example, from about 0.1 to about 2 weight percent of the resin can be selected.

Branching agents for use in forming the branched amorphous sulfonated polyester include, for example, a multivalent polyacid such as 1,2,4-benzenetricarboxylic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,3-dicarboxyl-2-methyl-2-methylene-carboxylpropane, tetra(methylene-carboxyl)methane, and 1,2,7,8-octanetetracarboxylic acid, acid anhydrides thereof, and lower alkyl esters thereof, 1 to about 6 carbon atoms; a multivalent polyol such as sorbitol, 1,2,3,6-hexanetetrol, 1,4-sorbitane, pentaerythritol, dipentaerythritol, tripentaerythritol, sucrose, 1,2,4-butanetriol, 1,2,5-pentatriol, glycerol, 2-methylpropanetriol, 2-methyl-1,2,4-butanetriol, trimethylolethane, trimethylolpropane, 1,3,5-trihydroxymethylbenzene, mixtures thereof, and the like. The branching agent amount selected is, for example, from about 0.1 to about 5 mole percent of the resin.

Polycondensation catalyst examples for amorphous polyesters include tetraalkyl titanates, dialkyltin oxide such as dibutyltin oxide, tetraalkyltin such as dibutyltin dilaurate, dialkyltin oxide hydroxide such as butyltin oxide hydroxide, aluminum alkoxides, alkyl zinc, dialkyl zinc, zinc oxide, stannous oxide, or mixtures thereof; and which catalysts are selected in amounts of, for example, from about 0.01 mole percent to about 5 mole percent based on the starting diacid or diester used to generate the polyester resin.

As used herein, references to "particle size" will generally refer to $D_{50}$ mass-median-diameter (MMD) or the log-normal distribution mass median diameter. The MMD is considered to be the average particle diameter by mass.

In embodiments, the composite has a particle size in a range of from about 5 nanometers (nm) to about 500 nm or from about 10 to about 200 nm, or from about 20 to about 100 nm. A composite particle size of less than 100 nm may be useful for reinforcement of polymer matrices without disturbing transparency and other properties of coatings.

In embodiments, the composite has a particle size of from about 5 nanometers to about 55 nanometers. In further embodiments, the composite has a particle size of from about 10 nanometers to about 15 nanometers.

In embodiments, a loading of silver is present in the composite in a range of from about 100 parts per million (ppm) to about 10,000 ppm or from about 200 ppm (0.02%) to about 5,000 ppm (0.5%), or from about 500 ppm (0.05%) to about 1,000 ppm (0.1%). Loading concentrations of silver within these ranges can be used for anti-bacterial applications.

In embodiments, the silver nanoparticles have a particle size in a range of from about 2 nm to about 50 nm, or from about 10 nm to about 50 nm, or from about 20 nm to about 50 nm. Silver nanoparticles of a diameter less than 100 nm absorb light primarily below 500 nm. This property is useful as it allows the AgNPs to be used in combination with fluorescence emission detection since most fluorophores emit at a wavelength above 500 nm, thus minimizing quenching of the signal.

In embodiments, the silver nanoparticles may comprise solely elemental silver or may be a silver composite, including composites with other metals. Such metal-silver composite may include either or both of (i) one or more other metals and (ii) one or more non-metals. Suitable other metals include for example Al, Au, Pt, Pd, Cu, Co, Cr, In, and Ni, particularly the transition metals for example Au, Pt, Pd, Cu, Cr, Ni, and mixtures thereof. Exemplary metal composites are Au-Ag, Ag-Cu, Au-Ag-Cu, and Au-Ag-Pd. Suitable non-metals in the metal composite include for example Si, C, and Ge. The various components of the silver composite may be present in an amount ranging, for example, from about 0.01% to about 99.9% by weight, particularly from about 10% to about 90% by weight. In embodiments, the silver

composite is a metal alloy composed of silver and one, two or more other metals, with silver comprising for example at least about 20% of the nanoparticles by weight, particularly greater than about 50% of the nanoparticles by weight. Unless otherwise noted, the weight percentages recited herein for the components of the silver-containing nanoparticles do not include the stabilizer.

While other metals can be used, only certain ones will have anti-bacterial properties. In embodiments, Co, Cu, Ni, Au and Pd can be used in a silver composite, wherein the Co, Cu, Ni, Au, Pd, or mixture or combination thereof can impart anti-bacterial and/or anti-microbial properties. In embodiments, Ag and Cu are selected. In other embodiments, composites including Pt, Al, Cr, In, and mixtures and combinations thereof, can be selected.

In embodiments, herein a composite comprises a sulfonated polyester matrix having a plurality of silver nanoparticles dispersed within the matrix wherein the silver nanoparticles comprise a composite comprising silver and one or more other metals; wherein the silver nanoparticles comprise a composite comprising silver and one or more non-metals; or wherein the silver nanoparticles comprise a composite comprising silver, one or more other metals, and one or more non-metals.

Silver nanoparticles composed of a silver composite can be made for example by using a mixture of (i) a silver compound (or compounds, especially silver (I) ion-containing compounds) and (ii) another metal salt (or salts) or another non-metal (or non-metals) during the reduction step.

Those skilled in the art will appreciate that metals other than silver may be useful and can be prepared in accordance with the methods disclosed herein. Thus, for example, composites may be prepared with nanoparticles of copper, gold, palladium, or composites of such exemplary metals.

In embodiments, the composites may comprise further nanostructured materials, such as, without limitation, carbon nanotubes (CNTs, including single-walled, double-walled, and multi-walled), graphene sheet, nanoribbons, nano-anions, hollow nanoshell metals, nano-wires and the like. In embodiments, CNTs may be added in amounts that enhance electrical and thermal conductivity.

In embodiments, there are provided methods comprising heating a sulfonated polyester resin in water, adding a solution of silver (I) ion to the heated resin in water to form a mixture, adding a solution of a reducing agent to the mixture, thereby forming an emulsion of composite particles comprising a sulfonated polyester matrix and a plurality of silver nanoparticles disposed within the sulfonated polyester matrix.

In embodiments, heating is conducted at a temperature of from about 65 °C to about 90 °C.

In certain embodiments, a method herein comprises heating a sodium sulfonated polyester resin in water, wherein the sodium sulfonated polyester has a degree of sulfonation of at least about 7.5 mol percent; adding a solution a silver (I) ion to the heated resin in water to form a mixture; optionally, adding a reducing agent to the mixture; and forming an emulsion of composite particles comprising a sodium sulfonated polyester matrix and a plurality of silver nanoparticles disposed within the sodium sulfonated polyester matrix. In embodiments, the method further comprises combining the composite particles with water, an optional colorant, and an optional co-solvent to form an aqueous ink composition.

In embodiments, a source of silver (I) ion is selected from silver nitrate, silver sulfonate, silver fluoride, silver perchlorate, silver lactate, silver tetrafluoroborate, silver oxide, and silver acetate. Silver nitrate is a common silver ion precursor for the synthesis of AgNPs.

In embodiments, the reducing agent is selected from ascorbic acid, trisodium citrate, glucose, galactose, maltose, lactose, gallic acid, rosmaric acid, caffeic acid, tannic acid, dihydrocaffeic acid, quercetin, sodium borohydride, potassium borohydride, hydrazine hydrate, sodium hypophosphite, hydroxylamine hydrochloride. In embodiments, reducing agents for the synthesis of AgNPs may include sodium borohydride or sodium citrate. Selection of appropriate reducing agent may provide access to desirable nanoparticle morphologies.

In embodiments, methods disclosed herein may be particularly well-suited for making composites with relatively low solids content. Under such conditions, silver ion and reducing agent may readily diffuse through the polymer matrix. In the case of silver ion, such ready diffusion may improve uniformity of distribution of silver throughout the matrix.

In embodiments, anti-bacterial ink jet inks are provided including the sulfopolyester materials described herein. In embodiments, the sulfopolyester copolymers contain a blend of polyethylene terephthalate and sulfonated isophthalate moieties.

In embodiments, an aqueous ink composition herein comprises water; an optional co-solvent; an optional colorant; and a composite comprising a sodium sulfonated polyester matrix, wherein the sodium sulfonated polyester has a degree of sulfonation of at least about 7.5 mol percent, and a plurality of silver nanoparticles dispersed within the matrix.

The ink can be used in any suitable or desired printing application. The ink herein is particularly useful for indirect printing applications wherein the ink wets the intermediate receiving member enabling formation of a transient image on the intermediate receiving member while undergoing a stimulus induced property change which enables release from the intermediate receiving member in the transfer printing step. In embodiments, the ink undergoes partial or complete drying while on the intermediate transfer member.

Ink compositions herein are specifically suitable for indirect printing systems, are compatible with different printing subsystems including jetting and transfer subsystems, and enable high quality printing at high speed. In embodiments, ink compositions herein enable and perform well in both wetting and transfer subsystems, displaying both acceptable wettability characteristics in combination with acceptable release and transfer characteristics.

The ink compositions herein can consist solely of water, or can comprise a mixture of water and a water soluble or water miscible component, referred to as a co-solvent, humectant, or the like (hereinafter co-solvent) such as alcohols and alcohol derivatives, including aliphatic alcohols, aromatic alcohols, dials, glycol ethers, polyglycol ethers, long chain alcohols, primary aliphatic alcohols, secondary aliphatic alcohols, 1,2-alcohols, 1,3-alcohols, 1,5-alcohols, ethylene glycol alkyl ethers, propylene glycol alkyl ethers, methoxylated glycerol, ethoxylated glycerol, higher homologues of polyethylene glycol alkyl ethers, and the like, with specific examples including ethylene glycol, propylene glycol, diethylene glycols, glycerine, dipropylene glycols, polyethylene glycols, polypropylene glycols, trimethylolpropane, 1,5-pentanediol, 2-methyl-1,3,-propanediol, 2-ethyl-2-hydroxymethyl-1,3-propanediol, 3-methoxybutanol, 3-methyl-1,5-pentanediol, 1,3-propanediol, 1,4-butanediol, 2,4-heptanediol, and the like; also suitable are amides, ethers, urea, substituted ureas such as thiourea, ethylene urea, alkylurea, alkylthiourea, dialkylurea, and dialkylthiourea, carboxylic acids and their salts, such as 2-methylpentanoic acid, 2-ethyl-3-propylacrylic acid, 2- ethyl-hexanoic acid, 3-ethoxyproponic, acid, and the like, esters, organosulfides, organosulfoxides, sulfones (such as sulfolane), carbitol, butyl carbitol, cellusolve, ethers, tripropylene glycol monomethyl ether, ether derivatives, hydroxyethers, amino alcohols, ketones, N-methylpyrrolidinone, 2-pyrrolidinone, cyclohexylpyrrolidone, amides, sulfoxides, lactones, polyelectrolytes, methyl sulfonylethanol, imidazole, 1,3-dimethyl-2-imidazolidinone, betaine, sugars, such as 1-deoxy-D-galactitol, mannitol, inositol, and the like, substituted and unsubstituted formamides, substituted and unsubstituted acetamides, and other water soluble or water miscible materials, as well as mixtures thereof. In embodiments, the co-solvent is selected from the group consisting of ethylene glycol, N-methylpyrrolidone, methoxylated glycerol, ethoxylated glycerol, and mixtures thereof.

When mixtures of water and water soluble or miscible organic solvent liquids are selected as the liquid vehicle, the water to organic co-solvent ratio ranges can be any suitable or desired ratio, in embodiments from about 100:0 to about 30:70, or from about 97:3 to about 40:60, or from about 95:5 to about 60:40. The non-water component of the liquid vehicle generally serves as a humectant or co-solvent which has a boiling point higher than that of water (100 °C). The co-solvent selected is one that will mix with water without phase separation; thus, a co-solvent having a polarity that is compatible with water is selected. The organic component of the ink vehicle can also serve to modify ink surface tension, modify ink viscosity, dissolve or disperse the colorant, and/or affect the drying characteristics of the ink. In embodiments, the ink is more attracted to paper substrates than plastic media as in solvent-based inks.

The water soluble or water miscible organics which are used in the ink formulation can help with surface tension, drying, leveling, etc. In embodiments, water makes up over 50% of the formulation, in embodiments water comprises from about 60 to about 70% of the ink composition. Thus, the ink compositions herein are mainly aqueous.

In certain embodiments, the co-solvent is selected from the group consisting of sulfolane, methyl ethyl ketone, isopropanol, 2-pyrrolidinone, polyethylene glycol, and mixtures thereof.

The total amount of liquid vehicle can be provided in any suitable or desired amount. In embodiments, the liquid vehicle is present in the ink composition in an amount of from about 75 to about 97 percent, or from about 80 to about 95 percent, or from about 85 to about 95 percent, by weight, based on the total weight of the ink composition.

The ink composition herein may also contain a colorant. Any suitable or desired colorant can be used in embodiments herein, including pigments, dyes, dye dispersions, pigments dispersions, and mixtures and combinations thereof.

The colorant may be provided in the form of a colorant dispersion. In embodiments, the colorant dispersion has an average particle size of from about 20 to about 500 nanometers (nm), or from about 20 to about 400 nm, or from about 30 to about 300 nm. In embodiments, the colorant is selected from the group consisting of dyes, pigments, and combinations thereof, and optionally, the colorant is a dispersion comprising a colorant, an optional surfactant, and an optional dispersant.

As noted, any suitable or desired colorant can be selected in embodiments herein. The colorant can be a dye, a pigment, or a mixture thereof. Examples of suitable dyes include anionic dyes, cationic dyes, nonionic dyes, zwitterionic dyes, and the like. Specific examples of suitable dyes include Food dyes such as Food Black No.1, Food Black No.2, Food Red No. 40, Food Blue No.1, Food Yellow No.7, and the like, FD & C dyes, Acid Black dyes (No.1, 7, 9, 24, 26, 48, 52, 58, 60, 61, 63, 92, 107, 109, 118, 119, 131, 140, 155, 156, 172, 194, and the like), Acid Red dyes (No. 1, 8, 32, 35, 37, 52, 57, 92, 115, 119, 154, 249, 254, 256, and the like), Acid Blue dyes (No. 1, 7, 9, 25, 40, 45, 62, 78, 80, 92, 102, 104, 113, 117, 127, 158, 175, 183, 193,209, and the like), Acid Yellow dyes (No.3, 7, 17, 19, 23, 25, 29, 38, 42, 49, 59, 61, 72, 73, 114, 128, 151, and the like), Direct Black dyes (No.4, 14, 17, 22, 27, 38, 51,112,117,154,168, and the like), Direct Blue dyes (No. 1, 6,8, 14, 15,25, 71, 76, 78, 80,86,90, 106,108,123,163,165, 199,226,and the like), Direct Red dyes (No. 1, 2, 16, 23, 24, 28, 39, 62, 72, 236, and the like), Direct Yellow dyes (No.4, 11, 12, 27, 28, 33, 34, 39, 50, 58, 86, 100, 106, 107, 118, 127, 132, 142, 157, and the like), Reactive Dyes, such as Reactive Red Dyes (No.4, 31, 56, 180, and the like), Reactive Black dyes (No. 31 and the like), Reactive Yellow dyes (No. 37 and the like);

anthraquinone dyes, monoazo dyes, disazo dyes, phthalocyanine derivatives, including various phthalocyanine sulfonate salts, aza(18)annulenes, formazan copper complexes, triphenodioxazines, and the like; as well as mixtures thereof.

Examples of suitable pigments include black pigments, white pigments, cyan pigments, magenta pigments, yellow pigments, and the like. Further, pigments can be organic or inorganic particles. Suitable inorganic pigments include carbon black. However, other inorganic pigments may be suitable such as titanium oxide, cobalt blue (CoO-$Al_20_3$), chrome yellow ($PbCr0_4$), and iron oxide. Suitable organic pigments include, for example, azo pigments including diazo pigments and monoazo pigments, polycyclic pigments (e.g., phthalocyanine pigments such as phthalocyanine blues and phthalocyanine greens), perylene pigments, perinone pigments, anthraquinone pigments, quinacridone pigments, dioxazine pigments, thioindigo pigments, isoindolinone pigments, pyranthrone pigments, and quinophthalone pigments), insoluble dye chelates (e.g., basic dye type chelates and acidic dye type chelate), nitro pigments, nitroso pigments, anthanthrone pigments such as PR168, and the like. Representative examples of phthalocyanine blues and greens include copper phthalocyanine blue, copper phthalocyanine green, and derivatives thereof (Pigment Blue 15, Pigment Green 7, and Pigment Green 36). Representative examples of quinacridones include Pigment Orange 48, Pigment Orange 49, Pigment Red 122, Pigment Red 192, Pigment Red 202, Pigment Red 206, Pigment Red 207, Pigment Red 209, Pigment Violet 19, and Pigment Violet 42. Representative examples of anthraquinones include Pigment Red 43, Pigment Red 194, Pigment Red 177, Pigment Red 216 and Pigment Red 226. Representative examples of perylenes include Pigment Red 123, Pigment Red 149, Pigment Red 179, Pigment Red 190, Pigment Red 189 and Pigment Red 224. Representative examples of thioindigoids include Pigment Red 86, Pigment Red 87, Pigment Red 88, Pigment Red 181, Pigment Red 198, Pigment Violet 36, and Pigment Violet 38. Representative examples of heterocyclic yellows include Pigment Yellow 1, Pigment Yellow 3, Pigment Yellow 12, Pigment Yellow 13, Pigment Yellow 14, Pigment Yellow 17, Pigment Yellow 65, Pigment Yellow 73, Pigment Yellow 74, Pigment Yellow 90, Pigment Yellow 110, Pigment Yellow 117, Pigment Yellow 120, Pigment Yellow 128, Pigment Yellow 138, Pigment Yellow 150, Pigment Yellow 151, Pigment Yellow 155, and Pigment Yellow 213. Such pigments are commercially available in either powder or press cake form from a number of sources including, BASF Corporation, Engelhard Corporation, and Sun Chemical Corporation. Examples of black pigments that may be used include carbon pigments. The carbon pigment can be almost any commercially available carbon pigment that provides acceptable optical density and print characteristics. Carbon pigments suitable for use in the present system and method include, without limitation, carbon black, graphite, vitreous carbon, charcoal, and combinations thereof. Such carbon pigments can be manufactured by a variety of known methods, such as a channel method, a contact method, a furnace method, an acetylene method, or a thermal method, and are commercially available from such vendors as Cabot Corporation, Columbian Chemicals Company, Evonik, and E.I. DuPont de Nemours and Company. Suitable carbon black pigments include, without limitation, Cabot pigments such as MONARCH®® 1400, MONARCH® 1300, MONARCH® 1100, MONARCH® 1000, MONARCH® 900, MONARCH® 880, MONARCH® 800, MONARCH® 700, CAB-O-JET® 200, CAB-O-JET 300, REGAL, BLACK PEARLS®, ELFTEX®, MOGUL®, and VULCAN® pigments; Columbian pigments such as RAVEN® 5000, and RAVEN® 3500; Evonik pigments such as Color Black FW 200, FW 2, FW 2V, FW 1, FW18, FW S160, FW S170, Special Black 6, Special Black 5, Special Black 4A, Special Black 4, PRINTEX® U, PRINTEX® 140U, PRINTEX® V, and PRINTEX® 140V. The above list of pigments includes unmodified pigment particulates, small molecule attached pigment particulates, and polymer-dispersed pigment particulates. Other pigments can also be selected, as well as mixtures thereof. The pigment particle size is desired to be as small as possible to enable a stable colloidal suspension of the particles in the liquid vehicle and to prevent clogging of the ink channels when the ink is used in a thermal ink jet printer or a piezoelectric ink jet printer.

The colorant can be present in the ink composition in any desired or effective amount, in embodiments, the colorant can be present in an amount of from about 0.05 to about 15 percent, or from about 0.1 to about 10 percent, or from about 1 to about 5 percent by weight, based on the total weight of the ink composition.

The inks disclosed may also contain a surfactant. Examples of suitable surfactants include ionic surfactants, anionic surfactants, cationic surfactants, nonionic surfactants, zwitterionic surfactants, and the like, as well as mixtures thereof. Examples of suitable surfactants include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like, with specific examples including primary, secondary, and tertiary amine salt compounds such as hydrochloric acid salts, acetic acid salts of laurylamine, coconut amine, stearylamine, rosin amine; quaternary ammonium salt type compounds such as lauryltrimethylammonium chloride, cetyltrimethylammonium chloride, benzyltributylammonium chloride, benzalkonium chloride, etc.; pyridinium salty type compounds such as cetylpyridinium chloride, cetylpyridinium bromide, etc.; nonionic surfactant such as polyoxyethylene alkyl ethers, polyoxyethylene alkyl esters, acetylene alcohols, acetylene glycols; and other surfactants such as 2- heptadecenyl-hydroxyethylimidazoline, dihydroxyethylstearylamine, stearyldimethylbetaine, and lauryldihydroxyethylbetaine; fluorosurfactants; and the like, as well as mixtures thereof. Additional examples of nonionic surfactants include polyacrylic acid, methalose, methyl cellulose, ethyl cellulose, propyl cellulose, hydroxy ethyl cellulose, carboxy methyl cellulose, polyoxyethylene cetyl ether, polyoxyethylene lauryl ether, polyoxyethylene octyl ether, polyoxyethylene octylphenyl ether, polyoxyethylene oleyl ether, polyoxyethylene

sorbitan monolaurate, polyoxyethylene stearyl ether, polyoxyethylene nonylphenyl ether, dialkylphenoxy poly(ethyleneoxy) ethanol, available from Rhone-Poulenc as IGEPAL CA-210™ IGEPAL CA-520™, IGEPAL CA-720™, IGEPAL CO-890™, IGEPAL C0-720™, IGEPAL C0-290™, IGEPAL CA-21O™, ANTAROX 890™, and ANTAROX 897™. Other examples of suitable nonionic surfactants include a block copolymer of polyethylene oxide and polypropylene oxide, including those commercially available as SYNPERONIC™ PE/F, such as SYNPERONIC™ PE/F 108. Other examples of suitable anionic surfactants include sulfates and sulfonates, sodium dodecylsulfate (SDS), sodium dodecylbenzene sulfonate, sodium dodecylnaphthalene sulfate, dialkyl benzenealkyl sulfates and sulfonates, acids such as abitic acid available from Sigma-Aldrich, NEOGEN R™, NEOGEN SC™ available from Daiichi Kogyo Seiyaku, combinations thereof, and the like. Other examples of suitable anionic surfactants include DOWFAX™ 2A1, an alkyldiphenyloxide disulfonate from Dow Chemical Company, and/or TAYCA POWER BN2060 from Tayca Corporation (Japan), which are branched sodium dodecyl benzene sulfonates. Other examples of suitable cationic surfactants, which are usually positively charged, include alkylbenzyl dimethyl ammonium chloride, dialkyl benzenealkyl ammonium chloride, lauryl trimethyl ammonium chloride, alkylbenzyl methyl ammonium chloride, alkyl benzyl dimethyl ammonium bromide, benzalkonium chloride, cetyl pyridinium bromide, C 12, C15, C17 trimethyl ammonium bromides, halide salts of quaternized polyoxyethylalkylamines, dodecylbenzyl triethyl ammonium chloride, MIRAPOL™ and ALKAQUAT™, available from Alkaril Chemical Company, SANIZOL™ (benzalkonium chloride), available from Kao Chemicals, and the like, as well as mixtures thereof. Mixtures of any two or more surfactants can be used.

The optional surfactant can be present in any desired or effective amount, in embodiments, the surfactant is present in an amount of from about 0.01 to about 5 percent by weight, based on the total weight of the ink composition. It should be noted that the surfactants are named as dispersants in some cases.

The ink composition can further comprise crosslinkers. In embodiments, the crosslinker is an organoamine, a dihydroxy aromatic compound, isocyanate, a peroxide, a metal oxide, or the like, as well as mixtures thereof. Crosslinking can further enhance the physical properties of the images generated from the ink composition. The crosslinker can be present in any desired or effective amount, in embodiments from about 0.1 to about 20 percent, or from 5 to about 15 percent, by weight, based on the total weight of the ink composition.

The ink composition can further comprise additives. Optional additives that can be included in the ink compositions include biocides, fungicides, pH controlling agents such as acids or bases, phosphate salts, carboxylates salts, sulfite salts, amine salts, buffer solutions, and the like, sequestering agents such as EDTA (ethylenediamine tetra acetic acid), viscosity modifiers, leveling agents, and the like, as well as mixtures thereof.

In embodiments, the ink composition is a low-viscosity composition. The term "low-viscosity" is used in contrast to conventional high-viscosity inks such as screen printing inks, which tend to have a viscosity of at least 1,000 centipoise (cps). In specific embodiments, the ink disclosed herein has a viscosity of no more than about 100 cps, no more than about 50 cps, or no more than about 20 cps, or from about 2 to about 30 cps at a temperature of about 30 °C, although the viscosity can be outside of these ranges. When used in ink jet printing applications, the ink compositions are generally of a viscosity suitable for use in said ink jet printing processes. For example, for thermal ink jet printing applications, at room temperature (i.e., about 25 °C), the ink viscosity is at least about 1 centipoise, no more than about 10 centipoise, no more than about 7 centipoise, or no more than about 5 centipoise, although the viscosity can be outside of these ranges. For piezoelectric ink jet printing, at the jetting temperature, the ink viscosity is at least about 2 centipoise, at least about 3 centipoise, no more than about 20 centipoise, no more than about 15 centipoise, or no more than about 10 centipoise, although the viscosity can be outside of these ranges. The jetting temperature can be as low as about 20 to 25 °C, and can be as high as about 70°C, as high as about 50°C, or as high as about 40°C, although the jetting temperature can be outside of these ranges.

In certain embodiments, the ink compositions herein have a viscosity of from about 2 to about 20 centipoise at a temperature of about 30 °C.

The ink compositions herein have selected surface tension characteristics that provide wetting and release properties suitable for indirect printing applications. In embodiments, the ink composition is selected to provide a surface tension, viscosity, and particle size that is suitable for use in a piezoelectric ink jet print head.

In embodiments, the ink composition herein has a surface tension of from about 15 to about 50 dynes per centimeter, or from about 18 to about 38 dynes per centime, or from about 20 to about 35 dynes per centimeter, although the surface tension can be outside of these ranges.

The ink compositions can be prepared by any suitable process, such as by simple mixing of the ingredients. One process entails mixing all of the ink ingredients together and filtering the mixture to obtain an ink. Inks can be prepared by mixing the ingredients, heating if desired, and filtering, followed by adding any desired additional additives to the mixture and mixing at room temperature with moderate shaking until a homogeneous mixture is obtained, in embodiments from about 5 to about 10 minutes. Alternatively, the optional ink additives can be mixed with the other ink ingredients during the ink preparation process, which takes place according to any desired procedure, such as by mixing all the ingredients, heating if desired, and filtering.

In a specific embodiment, the inks are prepared as follows: 1) preparation of a sulfonated polyester silver

nanoparticle composite; 2) preparation of a dispersion of a colorant optionally stabilized with a surfactant; 3) mixing of the composite with the colorant dispersion; 4) optional filtering of the mixture; 5) addition of other components such as water, co-solvents, and optional additives; and 6) optional filtering of the composition.

Also disclosed herein is a process which comprises applying an ink composition as disclosed herein to a substrate in an imagewise pattern. Also disclosed herein is a process which comprises applying an ink composition as disclosed herein to a substrate as an over coat, wherein the over coat can be clear, colored, or a combination thereof. In embodiments, the ink composition comprises a clear overcoat.

The ink compositions can be used in a process which entails incorporating the ink composition into an ink jet printing apparatus and causing droplets of the ink to be ejected in an imagewise pattern onto a substrate. In a specific embodiment, the printing apparatus employs a thermal ink jet process wherein the ink in the nozzles is selectively heated in an imagewise pattern, thereby causing droplets of the ink to be ejected in imagewise pattern. In another embodiment, the printing apparatus employs an acoustic ink jet process wherein droplets of the ink are caused to be ejected in imagewise pattern by acoustic beams. In yet another embodiment, the printing apparatus employs a piezoelectric ink jet process, wherein droplets of the ink are caused to be ejected in imagewise pattern by oscillations of piezoelectric vibrating elements. Any suitable substrate can be employed.

In a specific embodiment, a process herein comprises incorporating an ink prepared as disclosed herein into an ink jet printing apparatus, ejecting ink droplets in an imagewise pattern onto an intermediate transfer member, heating the image to partially or completely remove solvents, and transferring the ink in the imagewise pattern from the intermediate transfer member to a final recording substrate. In a specific embodiment, the intermediate transfer member is heated to a temperature above that of the final recording sheet and below that of the ink in the printing apparatus. An offset or indirect printing process is also disclosed in, for example, U.S. Patent 5,389,958.

In one specific embodiment, the printing apparatus employs a piezoelectric printing process wherein droplets of the ink are caused to be ejected in imagewise pattern by oscillations of piezoelectric vibrating elements.

Any suitable substrate or recording sheet can be employed as the final recording sheet, including plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, transparency materials, fabrics, textile products, plastics, polymeric films, inorganic substrates such as metals and wood, and the like. In embodiments, the substrate comprises a three-dimensional substrate. In embodiments, the substrate comprises medical devices such as catheters, thermometers, cardiac stents, programmable pace makers, other medical devices, menus, food packaging materials, cosmetic tools and products, and any other desired three-dimensional substrate. In further embodiments, the substrate comprises customizable digitally printed ID codes, short-run printable materials three-dimensional medical and any other desired three-dimensional substrate.

The following Examples are being submitted to further define various species of the present disclosure. Also, parts and percentages are by weight unless otherwise indicated.

**Example 1** (Reference Example)

Branched sodium sulfonated amorphous polyesters (BSPE-1). A branched amorphous sulfonated polyester resin comprised of 0.425 mole equivalent of terephthalate, 0.080 mole equivalent of sodium 5-sulfoisophthalic acid, 0.4501 mole equivalent of 1,2-propanediol, and 0.050 mole equivalent of diethylene glycol, was prepared as follows. In a one liter Parr reactor equipped with a heated bottom drain valve, high viscosity double turbine agitator, and distillation receiver with a cold water condenser was charged 388 grams of dimethyl terephthalate, 104.6 grams of sodium 5-sulfoisophthalic acid, 322.6 grams of 1,2-propanediol (1 mole excess of glycols), 48.98 grams of diethylene glycol, (1 mole excess of glycols), trimethylolpropane (5 grams), and 0.8 grams of butyltin hydroxide oxide as the catalyst. The reactor was heated to 165 °C with stirring for 3 hours and then again heated to 190 °C over a one hour period, after which the pressure was slowly reduced from atmospheric pressure to about 260 Torr over a one hour period, and then reduced to 5 Torr over a two hour period. The pressure was then further reduced to about 1 Torr over a 30 minute period and the polymer was discharged through the bottom drain onto a container cooled with dry ice to yield 460 grams of sulfonated polyester resin. The branched sulfonated polyester resin had a glass transition temperature measured to be 54.5 °C (onset) and a softening point of 154 °C.

**Example 2**

An amorphous sulfonated polyester resin comprised of 7.5 mole % sulfonated polyester sodium salt was prepared as follows.

In a two liter Buchi reactor equipped with a heated bottom drain valve, high viscosity double turbine agitator, and distillation receiver with a cold water condenser was charged 658 grams of dimethyl terephthalate, 252 grams of sodium 5-sulfoisophthalic acid, 580 grams of 1,2-propanediol (1 mole excess of glycols), 90 grams of diethylene glycol,

and 2.0 grams of butyltin hydroxide oxide as the catalyst. The reactor was heated to 165 °C with stirring for 3 hours and then again heated to 190 °C over a one hour period, after which the pressure was slowly reduced from atmospheric pressure to about 260 Torr over a one hour period, and then reduced to 5 Torr over a two hour period. The pressure was then further reduced to about 1 Torr over a 30 minute period and the polymer was discharged through the bottom drain onto a container cooled with dry ice to yield the sulfonated polyester resin. The sulfonated polyester resin had a glass transition temperature measured to be 55.4 °C (onset) a softening point of 135.9 °C, a number average molecular weight of 1326 g/ mole and weight average molecular weight of 2350, as measured by gel permeation chromatography and using polystyrene as standard for calibration.

**Comparative Example 3**

A branched amorphous sulfonated polyester resin comprised of 3 mole % sulfonated polyester lithium salt was prepared as follows.

In a 150 gallon reactor equipped with a heated bottom drain valve, high viscosity double turbine agitator, and distillation receiver with a cold water condenser was charged 174.7 Kg of dimethyl terephthalate, 14.5 Kg of sodium 5-sulfoisophthalic acid, 168 Kg of 1,2-propanediol (1 mole excess of glycols), 36 Kg of dipropylene glycol, 2.4 Kg of trimethylolpropane and 500 grams of butyltin hydroxide oxide as the catalyst. The reactor was heated to 165 °C with stirring for 3 hours and then again heated to 190 °C over a one hour period, after which the pressure was slowly reduced from atmospheric pressure to about 260 Torr over a two hour period, and then reduced to 5 Torr over a six hour period and the polymer was discharged through the bottom drain onto a container cooled with dry ice to yield the sulfonated polyester resin. The sulfonated polyester resin had a softening point of 154.0 °C.

**Comparative Example 4**

A branched amorphous sulfonated polyester resin comprised of 2 mole % sulfonated polyester lithium salt was prepared as follows.

In a 150 gallon reactor equipped with a heated bottom drain valve, high viscosity double turbine agitator, and distillation receiver with a cold water condenser was charged 191.25 Kg of dimethyl terephthalate, 11.25 Kg of sodium 5-sulfoisophthalic acid, 148 Kg of 1,2-propanediol (1 mole excess of glycols), 12.8 Kg of diethylene glycol, 53.3 Kg of dipropylene glycol, 2.48 Kg of trimethylolpropane and 338 grams of butyltin hydroxide oxide as the catalyst. The reactor was heated to 165 °C with stirring for 3 hours and then again heated to 190 °C over a one hour period, after which the pressure was slowly reduced from atmospheric pressure to about 260 Torr over a two hour period, and then reduced to 5 Torr over a six hour period and the polymer was discharged through the bottom drain onto a container cooled with dry ice to yield the sulfonated polyester resin. The sulfonated polyester resin had softening point of 164.8 °C.

**Example 5** (Reference Example)

3.5 % sulfonated polyester sodium salt. A branched amorphous sulfonated polyester resin comprising 3.5 mole % sulfonated polyester sodium salt was prepared as follows.

In a 20 liter Buchi reactor equipped with a heated bottom drain valve, high viscosity double turbine agitator, and distillation receiver with a cold water condenser was charged 3,880 grams of dimethyl terephthalate, 520 grams of sodium 5-sulfoisophthalic acid, 3150 grams of 1,2-propanediol (1 mole excess of glycols), 260 grams of diethylene glycol, 820 grams of dipropylene glycol, 50 grams of trimethylolpropane and 1.0 grams of butyltin hydroxide oxide as the catalyst. The reactor was heated to 165 °C with stirring for 3 hours and then again heated to 190 °C over a one hour period, after which the pressure was slowly reduced from atmospheric pressure to about 260 Torr over a one hour period, and then reduced to 5 Torr over a two hour period. The pressure was then further reduced to about 1 Torr over a 30 minute period and the polymer was discharged through the bottom drain onto a container cooled with dry ice to yield 460 grams of sulfonated polyester resin. The sulfonated polyester resin had a glass transition temperature measured to be 60 °C (onset) a softening point of 142.7 °C.

**Comparative Example 6**

7.5 % sulfonated polyester lithium salt. To a 500 milliliter 3 neck round bottom flask equipped with a magnetic stir bar, T/C probe, and condenser was added 25 grams of the 7.5% sulfonated polyester sodium salt of Example 2, followed by 150 milliliters of deionized water. The round bottom flask was heated to 95 °C, with heating continued until the contents were completely dissolved/dispersed. Next, 20 to 30 milliliters of 20% HCl solution were added to precipitate out the polymer. The precipitate was then filtered, wash, and redissolved, slowly adding LiOH to create the lithium salt. The solid was washed with water and dried to furnish a white hygroscopic solid.

Table 2 provides a summary of the solubility test results for the sodio- and litho-sulfonated polymers whose preparation were described in Examples 1-6.

**Table 2**

| Entry | SPE | % Sulfonation | Weight % Ag salt/polymer | Solids Loading (%) | Particle Size (nanometers) |
|---|---|---|---|---|---|
| A | BSPE-1 ($Na^+$) Example 1 | 4.0 | 0.1 | 5.78 | 53.1 |
| B | | | 0.5 | 5.3 | 53.7 |
| C | GS678 ($Na^+$) Example 2 | 7.5 | 0.1 | 5.5 | 14.6 |
| D | | | 0.5 | 4.9 | 16.7 |
| E | BSPE-2 ($Li^+$)Comp. Example 3 | 3.0 | 0.1 | N/A | N/A |
| F | | | 0.5 | N/A | N/A |
| G | BSPE-3 ($Li^+$) Comp. Example 4 | 2.17 | 0.1 | N/A | N/A |
| H | | | 0.5 | N/A | N/A |
| I | GS905 ($Na^+$) Example 5 | 3.5 | 0.1 | 4.86 | 34.6 |
| J | | | 0.5 | 4.91 | 29.4 |
| K | AB4795 ($Li^+$)Comp. Example 6 | 7.5 | 0.1 | N/A | N/A |

Solubility testing of sulfonated polyester examples.

In a 500 mL 3-necked round-bottomed flask was added DIW (deionized water). A magnetic stir bar was added, and the water was heated to 95°C. Next, the sodio- or litho-sulfonated polyester resin (at 5 wt% solids loading) was gradually added to the hot water, and heating was continued for 1 hour.

Formation of Ag nanoparticle composites. For the soluble dispersions of SPE, AgNO3 solution was added to the dispersed SPE's in hot water (described above) at 0.1 and 0.5wt% Ag salt/polymer. The heated solution was allowed to stir for an addition 2 hours to allow the autoreduction of Ag salt to create Ag nanoparticles. Finally, the solutions were cooled to room temperature, and particle size measurements were performed on the Ag NP/SPE composite dispersions using a MicroTrack particle size analyzer. Due to the insolubility of the Li salts, no Ag NP composites could be made (hence the N/A entry in Table 2).

Different sulfonated polyester composites with varying degrees of sulfonation and counter ion were prepared and tested for solubility at a standard concentration of 5 weight percent in hot water. Only the sodium sulfonated polyester composites exhibited water dispersibility. For the highly sulfonated polymer described in Example 2, the degree of sulfonation was so high that the domain size was about 10 to about 15 nanometers and the solution was 100 percent clear for entries C and D, respectively. Comparative Examples 3, 4 and 6 were not 100 % dissipatible at these concentrations, and thus Ag NP composites could not be formed due to this polymer insolubility. Thus, the composites herein provide higher solids loading and improved ink jet printing capability.

**Example 7** (Reference Example)

An ink composition containing the branched amorphous sulfonated polyester resin of Example 1 was prepared as follows. To a 500 milliliter amber glass bottle was added the BSPE-AgNP emulsion of Example 1 and triethanolamine which was stirred for 2 minutes at 300 RPM. To the stirring mixture was added diethylene glycol, 1,5-pentanediol and glycerol. The mixture was stirred for 1 minute at 500 RPM. Next was added 2-ethyl-1-hexanol and polyethylene oxide (PEO) and the mixture was further stirred for an additional 1 minute at 500 RPM. The surfactants Silsurf®A008 (Siltech Corporation; low molecular weight ethoxylated polydimethylsiloxane / Silicone Polyether), Surfynol® 104H (Air Products and Chemicals, Inc.; 75% 2,4,7,9-Tetramethyl-5-decyne-4,7-diol, 25% Ethylene glycol), and Chemguard® S-761p [Chemguard Chemical; short-chain perfluoro-based anionic fluorosurfactant of the phosphate ester type (34% active solids) were added to the ink and the mixture was stirred for 45 minutes at 500 RPM. The ink was then homogenized for 5 minutes at 2000 RPM and filtered through a 0.45 micron filter before testing.

The sodium sulfonated polyester matrix material described herein can be used to impart anti-bacterial and antifungal protection similar to the anti-bacterial activity of BSPE-AgNP composites described in U.S. Patent 9,617,437,

incorporated by reference herein in its entirety.

The aqueous ink compositions herein can be used as clear ink jet over coats, as colored ink jet over coats, or for preparing colored ink jet images, all providing anti-bacterial and antifungal protection on a variety of substrates.

The ink compositions comprise a self-dispersible polyester-Ag nanocomposite. In embodiments, the Ag is present in the ink composition in an amount of from about 0.5 parts per million to about 5,000 parts per million, or from about 50 parts per million to about 500 parts per million.

An advantage of silver nanoparticles bound to larger particles, sediment, colloidal particle, or macromolecule comparted to ionic silver is that the present silver nanoparticles are not water soluble, and will not be freely released into the environment. The BSPE-AgNP system can act as a reservoir for the delivery of slow-paced dissolved silver ions for maximum anti-bacterial, antifungal, and antiviral biocide effect. In embodiments, the composite herein acts as a reservoir for the delivery of silver ions for anti-bacterial, antifungal, and antiviral biocide effect.

Silver exhibits anti-microbial activity against a broad range of micro-organisms and due to increasing antibiotic resistance, there has recently been a renewed interest in using silver as an anti-bacterial agent.

The present aqueous ink compositions enable customizable digitally printed ID codes, short-run printable materials, printing on three-dimensional medical components such as catheters, cardiac stents, programmable pace makers, and any other desired three-dimensional substrate.

## Claims

**1.** A composite comprising:

a sodium sulfonated polyester matrix;
wherein the sodium sulfonated polyester has a degree of sulfonation of at least about 7.5 mol percent; and
a plurality of silver nanoparticles dispersed within the matrix.

**2.** The composite of claim 1, wherein the sodium sulfonated polyester has a degree of sulfonation of at least about 7.5 mol percent to about 15 mol percent.

**3.** The composite of claim 1, wherein the sodium sulfonated polyester has a degree of sulfonation of from at least about 7.5 mol percent to about 10 mol percent.

**4.** The composite of claim 1, wherein the sodium sulfonated polyester matrix comprises a branched polymer.

**5.** The composite of claim 1, wherein the sodium sulfonated polyester matrix comprises a linear polymer.

**6.** The composite of claim 1, wherein the sodium sulfonated polyester matrix is a sodium salt of a polymer selected from the group consisting of poly(1,2-propylene-5-sulfoisophthalate), poly(neopentylene- 5-sulfoisophthalate), poly(diethylene- 5-sulfoisophthalate), copoly-(1,2-propylene- 5-sulfoisophthalate)-copoly-(1,2-propylene-terphthalate), copoly-(1,2-propylenediethylene-5-sulfoisophthalate)-copoly-(1,2-propylene-diethylene-terephthalatephthalate), copoly(ethylene-neopentylene-5-sulfoisophthalate)-copoly-(ethylene-neopentylene-terephthalatephthalate), and copoly(propoxylated bisphenol A)-copoly-(propoxylated bisphenol A-5-sulfoisophthalate).

**7.** The composite of claim 1, wherein the sodium sulfonated polyester matrix comprises a polyol monomer unit selected from the group consisting of trimethylolpropane, 1,2-propanediol, diethylene glycol, and combinations thereof.

**8.** The composite of claim 1, wherein the sodium sulfonated polyester matrix comprises a diacid monomer unit selected from the group consisting of terephthalic acid, sulfonated isophthalic acid, and combinations thereof.

**9.** The composite of claim 1, wherein the composite has a particle size in a range from about 5 nanometers to about 500 nanometers.

**10.** The composite of claim 1, wherein the composite has a particle size in a range from about 5 nanometers to about 55 nanometers.

**11.** The composite of claim 1, wherein the silver nanoparticles comprise a silver composite comprising silver and one or more other metals;
wherein the silver nanoparticles comprise a silver composite comprising silver and one or more non-metals; or

wherein the silver nanoparticles comprise a silver composite comprising silver, one or more other metals, and one or more non-metals.

**12.** An aqueous ink composition comprising:

water;
an optional co-solvent;
an optional colorant; and
a composite comprising: a sodium sulfonated polyester matrix; wherein the sodium sulfonated polyester has a degree of sulfonation of at least about 7.5 mol percent; and a plurality of silver nanoparticles dispersed within the matrix.

**13.** The ink composition of claim 12, wherein the sodium sulfonated polyester matrix comprises a branched polymer; or wherein the sodium sulfonated polyester matrix comprises a linear polymer.

**14.** The ink composition of claim 12, wherein the sodium sulfonated polyester matrix is a sodium salt of a polymer selected from the group consisting of poly(1,2-propylene-5-sulfoisophthalate), poly(neopentylene- 5-sulfoisophthalate), poly(diethylene- 5-sulfoisophthalate), copoly-(1,2-propylene-5-sulfoisophthalate)-copoly-(1,2-propylene-terphthalate), copoly-(1,2-propylenediethylene-5-sulfoisophthalate)-copoly-(1,2-propylene-diethylene-terephthalatephthalate), copoly(ethylene-neopentylene-5-sulfoisophthalate)-copoly-(ethylene-neopentylene-terephthalatephthalate), and copoly(propoxylated bisphenol A)-copoly-(propoxylated bisphenol A-5-sulfoisophthalate).

**15.** A method comprising:

heating a sodium sulfonated polyester resin in water, wherein the sodium sulfonated polyester has a degree of sulfonation of at least about 7.5 mol percent;
adding a solution of a silver (I) ion to the heated resin in water to form a mixture;
optionally, adding a reducing agent to the mixture; and
forming an emulsion of composite particles comprising a sodium sulfonated polyester matrix and a plurality of silver nanoparticles disposed within the sodium sulfonated polyester matrix.

**16.** The method of claim 15, wherein the sodium sulfonated polyester matrix is a sodium salt of a polymer selected from the group consisting of poly(1,2-propylene-5-sulfoisophthalate), poly(neopentylene- 5-sulfoisophthalate), poly(diethylene- 5-sulfoisophthalate), copoly-(1,2-propylene- 5-sulfoisophthalate)-copoly-(1,2-propylene-terphthalate), copoly-(1,2-propylenediethylene-5-sulfoisophthalate)-copoly-(1,2-propylene-diethylene-terephthalatephthalate), copoly(ethylene-neopentylene-5-sulfoisophthalate)-copoly-(ethylene-neopentylene-terephthalatephthalate), and copoly(propoxylated bisphenol A)-copoly-(propoxylated bisphenol A-5-sulfoisophthalate).

**17.** The method of claim 15, wherein a source of silver (I) ion is selected from the group consisting of silver nitrate, silver sulfonate, silver fluoride, silver perchlorate, silver lactate, silver tetrafluoroborate, silver oxide, and silver acetate.

**18.** The method of claim 15, further comprising:
combining the composite particles of claim 15 with water, an optional colorant, and an optional co-solvent to form an aqueous ink composition.

**19.** The method of claim 15, wherein the composite particles have a particle size in a range of from about 5 nanometers to about 55 nanometers.

## Patentansprüche

**1.** Verbundmaterial, umfassend:

eine natriumsulfonierte Polyestermatrix;
wobei der natriumsulfonierte Polyester einen Sulfonierungsgrad von mindestens etwa 7,5 Mol-% aufweist, und eine Vielzahl von Silbernanopartikeln, die in der Matrix dispergiert sind.

**2.** Verbundmaterial nach Anspruch 1, wobei der natriumsulfonierte Polyester einen Sulfonierungsgrad von mindestens

etwa 7,5 Mol-% bis etwa 15 Mol-% aufweist.

3. Verbundmaterial nach Anspruch 1, wobei der natriumsulfonierte Polyester einen Sulfonierungsgrad von mindestens etwa 7,5 Mol-% bis etwa 10 Mol-% aufweist.

4. Verbundmaterial nach Anspruch 1, wobei die natriumsulfonierte Polyestermatrix ein verzweigtes Polymer umfasst.

5. Verbundmaterial nach Anspruch 1, wobei die natriumsulfonierte Polyestermatrix ein lineares Polymer umfasst.

6. Verbundmaterial nach Anspruch 1, wobei es sich bei der natriumsulfonierten Polyestermatrix um ein Natriumsalz eines Polymers handelt, ausgewählt aus der Gruppe bestehend aus Poly(1,2-propylen-5-sulfoisophthalat), Poly(neopentylen-5-sulfoisophthalat), Poly(diethylen-5-sulfoisophthalat), Copoly-(1,2-propylen-5-sulfoisophthalat)-copoly-(1,2-propylen-terphthalat), Copoly-(1,2-propylendiethylen-5-sulfoisophthalat)-copoly-(1,2-propylen-diethylen)-terephthalatphthalat), Copoly(ethylen-neopentylen-5-sulfoisophthalat)-copoly-(ethylen-neopentylenterephthalatphthalat) und Copoly(propoxyliertes Bisphenol A)-copoly-(propoxyliertes Bisphenol A-5-sulfoisophthalat).

7. Verbundmaterial nach Anspruch 1, wobei die natriumsulfonierte Polyestermatrix eine Polyolmonomereinheit umfasst, ausgewählt aus der Gruppe bestehend aus Trimethylolpropan, 1,2-Propandiol, Diethylenglykol und Kombinationen davon.

8. Verbundmaterial nach Anspruch 1, wobei die natriumsulfonierte Polyestermatrix eine Disäuremonomereinheit umfasst, ausgewählt aus der Gruppe bestehend aus Terephthalsäure, sulfonierter Isophthalsäure und Kombinationen davon.

9. Verbundmaterial nach Anspruch 1, wobei das Verbundmaterial eine Teilchengröße in einem Bereich von etwa 5 Nanometern bis etwa 500 Nanometern aufweist.

10. Verbundmaterial nach Anspruch 1, wobei das Verbundmaterial eine Teilchengröße in einem Bereich von etwa 5 Nanometern bis etwa 55 Nanometern aufweist.

11. Verbundmaterial nach Anspruch 1, wobei die Silbernanopartikel ein Silberverbundmaterial umfassen, das Silber und ein oder mehrere andere Metalle umfasst;
wobei die Silbernanopartikel ein Silberverbundmaterial umfassen, das Silber und ein oder mehrere Nichtmetalle umfasst, oder
wobei die Silbernanopartikel ein Silberverbundmaterial umfassen, das Silber, ein oder mehrere andere Metalle und ein oder mehrere Nichtmetalle umfasst.

12. Wässrige Tintenzusammensetzung, umfassend:

 Wasser;
 ein optionales Co-Lösungsmittel;
 einen optionalen Farbstoff und
 ein Verbundmaterial, umfassend: eine natriumsulfonierte Polyestermatrix; wobei der natriumsulfonierte Polyester einen Sulfonierungsgrad von mindestens etwa 7,5 Mol-% aufweist, und eine Vielzahl von Silbernanopartikeln, die in der Matrix dispergiert sind.

13. Tintenzusammensetzung nach Anspruch 12, wobei die natriumsulfonierte Polyestermatrix ein verzweigtes Polymer umfasst oder
wobei die natriumsulfonierte Polyestermatrix ein lineares Polymer umfasst.

14. Tintenzusammensetzung nach Anspruch 12, wobei es sich bei der natriumsulfonierten Polyestermatrix um ein Natriumsalz eines Polymers handelt, ausgewählt aus der Gruppe bestehend aus Poly(1,2-propylen-5-sulfoisophthalat), Poly(neopentylen-5-sulfoisophthalat), Poly(diethylen-5-sulfoisophthalat), Copoly-(1,2-propylen-5-sulfoisophthalat)-copoly-(1,2-propylen-terphthalat), Copoly-(1,2-propylendiethylen-5-sulfoisophthalat)-copoly-(1,2-propylendiethylenterephthalatphthalat), Copoly(ethylen-neopentylen-5-sulfoisophthalat)-copoly-(ethylen-neopentylenterephthalatphthalat) und Copoly(propoxyliertes Bisphenol A)-copoly-(propoxyliertes Bisphenol A-5-sulfoisophthalat).

**15.** Verfahren, umfassend:

Erhitzen eines natriumsulfonierten Polyesterharzes in Wasser, wobei der natriumsulfonierte Polyester einen Sulfonierungsgrad von mindestens etwa 7,5 Mol-% aufweist;
Hinzufügen einer Lösung eines Silber (I)-Ions zu dem erhitzten Harz in Wasser, um eine Mischung zu bilden;
gegebenenfalls Hinzufügen eines Reduktionsmittels zu der Mischung und
Bilden einer Emulsion von Verbundteilchen, die eine natriumsulfonierte Polyestermatrix und eine Vielzahl von Silbernanopartikeln, die in der natriumsulfonierten Polyestermatrix angeordnet sind, umfassen.

**16.** Verfahren nach Anspruch 15, wobei es sich bei der natriumsulfonierten Polyestermatrix um ein Natriumsalz eines Polymers handelt, ausgewählt aus der Gruppe bestehend aus Poly(1,2-propylen-5-sulfoisophthalat), Poly(neopentylen-5-sulfoisophthalat), Poly(diethylen-5-sulfoisophthalat), Copoly-(1,2-propylen-5-sulfoisophthalat)-copoly-(1,2-propylen-terphthalat), Copoly-(1,2-propylendiethylen-5-sulfoisophthalat)-copoly-(1,2-propylen-diethylen)-terephthalatphthalat), Copoly(ethylen-neopentylen-5-sulfoisophthalat)-copoly-(ethylen-neopentylenterephthalatphthalat) und Copoly(propoxyliertes Bisphenol A)-copoly-(propoxyliertes Bisphenol A-5-sulfoisophthalat).

**17.** Verfahren nach Anspruch 15, wobei eine Quelle des Silber(I)-Ions ausgewählt ist aus der Gruppe bestehend aus Silbernitrat, Silbersulfonat, Silberfluorid, Silberperchlorat, Silberlactat, Silbertetrafluorborat, Silberoxid und Silberacetat.

**18.** Verfahren nach Anspruch 15, ferner umfassend:
Kombinieren der Verbundteilchen nach Anspruch 15 mit Wasser, einem optionalen Färbemittel und einem optionalen Co-Lösungsmittel, um eine wässrige Tintenzusammensetzung zu bilden.

**19.** Verfahren nach Anspruch 15, wobei die Verbundteilchen eine Teilchengröße in einem Bereich von etwa 5 Nanometern bis etwa 55 Nanometern aufweisen.

## Revendications

**1.** Composite comprenant :

une matrice de polyester sulfoné sodique ;
dans lequel le polyester sulfoné sodique a un degré de sulfonation d'au moins environ 7,5 % en moles ; et
une pluralité de nanoparticules d'argent dispersées à l'intérieur de la matrice.

**2.** Composite selon la revendication 1, dans lequel le polyester sulfoné sodique a un degré de sulfonation d'au moins environ 7,5 % en moles à environ 15 % en moles.

**3.** Composite selon la revendication 1, dans lequel le polyester sulfoné sodique a un degré de sulfonation d'au moins environ 7,5 % en moles à environ 10 % en moles.

**4.** Composite selon la revendication 1, dans lequel la matrice de polyester sulfoné sodique comprend un polymère ramifié.

**5.** Composite selon la revendication 1, dans lequel la matrice de polyester sulfoné sodique comprend un polymère linéaire.

**6.** Composite selon la revendication 1, dans lequel la matrice de polyester sulfoné sodique est un sel sodique d'un polymère choisi dans le groupe constitué par le poly(5-sulfoisophtalate de 1,2-propylène), le poly(5-sulfoisophtalate de néopentylène), le poly(5-sulfoisophtalate de diéthylène), le copoly(5-sulfoisophtalate de 1,2-propylène)-copoly(téréphtalate de 1,2-propylène), le copoly(5-sulfoisophtalate de 1,2-propylène-diéthylène)-copoly(téréphtalate-phtalate de 1,2-propylène-diéthylène), le copoly(5-sulfoisophtalate d'éthylène-néopentylène)-copoly-téréphtalate-phtalate d'éthylène-néopentylène), et le copoly(bisphénol A propoxylé)-copoly(5-sulfoisophtalate de bisphénol A propoxylé).

**7.** Composite selon la revendication 1, dans lequel la matrice de polyester sulfoné sodique comprend un motif monomère de polyol choisi dans le groupe constitué par le triméthylolpropane, le 1,2-propanediol, le diéthylèneglycol, et

leurs combinaisons.

8. Composite selon la revendication 1, dans lequel la matrice de polyester sulfoné sodique comprend un motif monomère de diacide choisi dans le groupe constitué par l'acide téréphtalique, l'acide isophtalique sulfoné, et leurs combinaisons.

9. Composite selon la revendication 1, lequel composite a une granulométrie située dans la plage allant d'environ 5 nanomètres à environ 500 nanomètres.

10. Composite selon la revendication 1, lequel composite a une granulométrie située dans la plage allant d'environ 5 nanomètres à environ 55 nanomètres.

11. Composite selon la revendication 1, dans lequel les nanoparticules d'argent comprennent un composite d'argent comprenant de l'argent et un ou plusieurs autres métaux ;
dans lequel les nanoparticules d'argent comprennent un composite d'argent comprenant de l'argent et un ou plusieurs non-métaux ; ou
dans lequel les nanoparticules d'argent comprennent un composite d'argent comprenant de l'argent, un ou plusieurs autres métaux, et un ou plusieurs non-métaux.

12. Composition d'encre aqueuse comprenant :

de l'eau ;
un co-solvant éventuel ;
un colorant éventuel ; et
un composite comprenant : une matrice de polyester sulfoné sodique ; lequel polyester sulfoné sodique a un degré de sulfonation d'au moins environ 7,5 % en moles ; et une pluralité de nanoparticules d'argent dispersées à l'intérieur de la matrice.

13. Composition d'encre selon la revendication 12, dans laquelle la matrice de polyester sulfoné sodique comprend un polymère ramifié ; ou
dans laquelle la matrice de polyester sulfoné sodique comprend un polymère linéaire.

14. Composition d'encre selon la revendication 12, dans laquelle la matrice de polyester sulfoné sodique est un sel sodique d'un polymère choisi dans le groupe constitué par le poly(5-sulfoisophtalate de 1,2-propylène), le poly(5-sulfoisophtalate de néopentylène), le poly(5-sulfoisophtalate de diéthylène), le copoly(5-sulfoisophtalate de 1,2-propylène)-copoly(téréphtalate de 1,2-propylène), le copoly(5-sulfoisophtalate de 1,2-propylène-diéthylène)-copoly(téréphtalate-phtalate de 1,2-propylène-diéthylène), le copoly(5-sulfoisophtalate d'éthylène-néopentylène)-copoly-téréphtalate-phtalate d'éthylène-néopentylène), et le copoly(bisphénol A propoxylé)-copoly(5-sulfoisophtalate de bisphénol A propoxylé).

15. Procédé comprenant :

le chauffage d'une résine de polyester sulfoné sodique dans de l'eau, lequel polyester sulfoné sodique a un degré de sulfonation d'au moins environ 7,5 % en moles ;
l'addition d'une solution d'un ion argent(I) à la résine chauffée dans l'eau pour former un mélange ;
éventuellement l'addition d'un agent réducteur au mélange ; et
la formation d'une émulsion de particules composites comprenant une matrice de polyester sulfoné sodique et une pluralité de nanoparticules d'argent disposées à l'intérieur de la matrice de polyester sulfoné sodique.

16. Procédé selon la revendication 15, dans lequel la matrice de polyester sulfoné sodique est un sel sodique d'un polymère choisi dans le groupe constitué par le poly(5-sulfoisophtalate de 1,2-propylène), le poly(5-sulfoisophtalate de néopentylène), le poly(5-sulfoisophtalate de diéthylène), le copoly(5-sulfoisophtalate de 1,2-propylène)-copoly(téréphtalate de 1,2-propylène), le copoly(5-sulfoisophtalate de 1,2-propylène-diéthylène)-copoly(téréphtalate-phtalate de 1,2-propylène-diéthylène), le copoly(5-sulfoisophtalate d'éthylène-néopentylène)-copoly-téréphtalate-phtalate d'éthylène-néopentylène), et le copoly(bisphénol A propoxylé)-copoly(5-sulfoisophtalate de bisphénol A propoxylé).

17. Procédé selon la revendication 15, dans lequel une source d'ion argent(I) est choisie dans le groupe constitué par

le nitrate d'argent, le sulfonate d'argent, le fluorure d'argent, le perchlorate d'argent, le lactate d'argent, le tétrafluoroborate d'argent, l'oxyde d'argent, et l'acétate d'argent.

**18.** Procédé selon la revendication 15, comprenant en outre :
la combinaison des particules composites de la revendication 15 avec de l'eau, un colorant éventuel, et un co-solvant éventuel pour former une composition d'encre aqueuse.

**19.** Procédé selon la revendication 15, dans lequel les particules composites ont une granulométrie située dans la plage allant d'environ 5 nanomètres à environ 55 nanomètres.

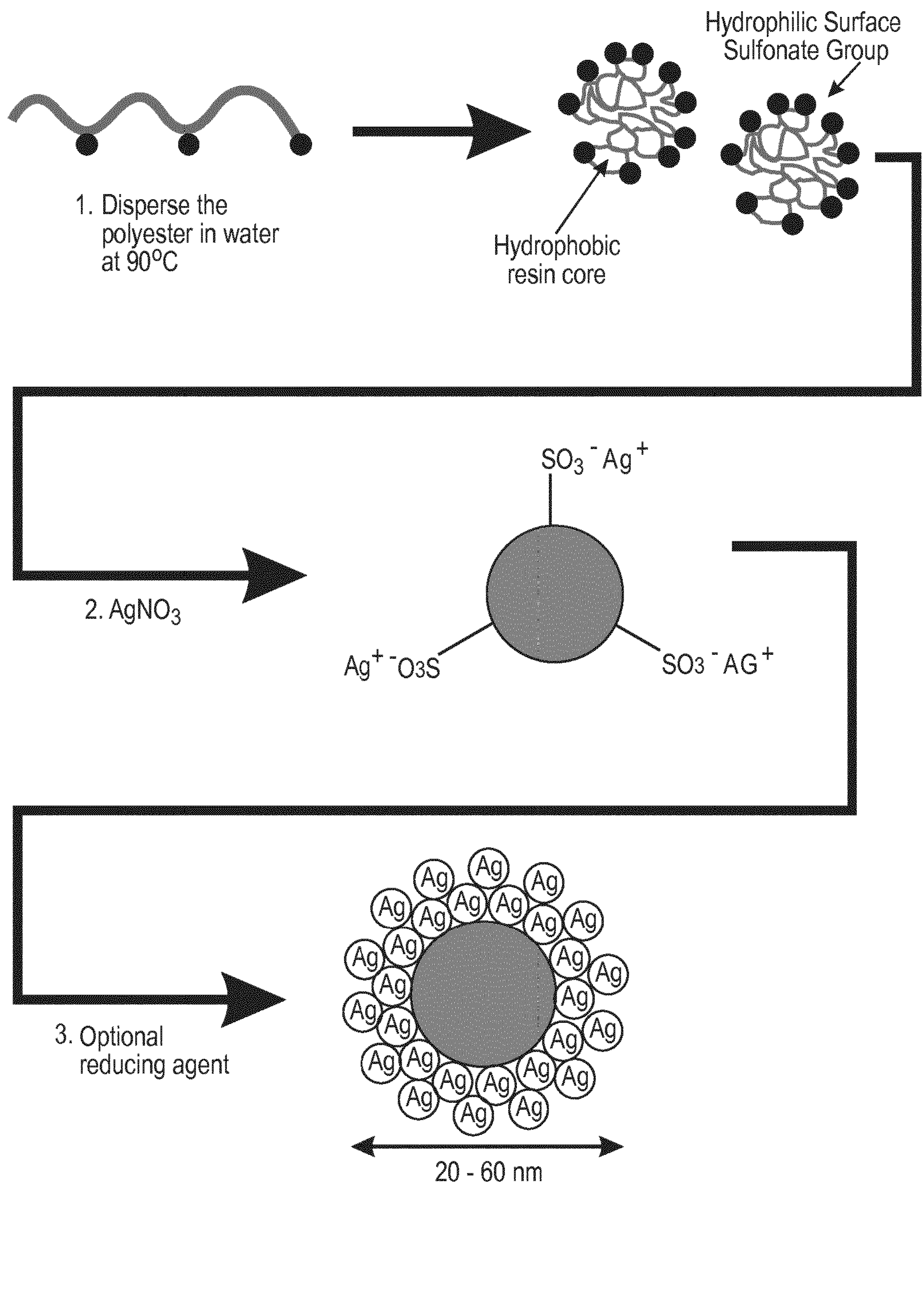
Hydrophilic Surface
Sulfonate Group
1. Disperse the
polyester in water
at 90°C
Hydrophobic
resin core
$SO_3^-Ag^+$
2. $AgNO_3$
$Ag^+$ $^-O_3S$
$SO_3^-AG^+$
3. Optional
reducing agent
Ag
20 - 60 nm

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6210474 B
- US 8616694 B
- US 20130189499 A
- US 9617437 B
- US 531900
- US 7312011 B
- US 5389958 A